# EUROPÄISCHE PATENTSCHRIFT

(11) **EP 3 593 007 B1**
(45) Veröffentlichungstag und Bekanntmachung des Hinweises auf die Patenterteilung: **24.03.2021**
(21) Anmeldenummer: 18706979.4
(22) Anmeldetag: 13.02.2018
(51) Int. Cl.: F16F 15/14

(54) **TILGERSYSTEM**
ABSORBER SYSTEM
SYSTÈME D'AMORTISSEMENT

(30) Priorität: 09.03.2017 DE 102017203922
(43) Veröffentlichungstag der Anmeldung: 15.01.2020
(73) Patentinhaber: ZF Friedrichshafen AG, 88046 Friedrichshafen (DE)
(72) Erfinder: SIEMENS, Kyrill, 97084 Würzburg (DE)
(74) Vertreter: ZF Friedrichshafen AG
(86) Internationale Anmeldenummer: PCT/EP2018/053497
(87) Internationale Veröffentlichungsnummer: WO 2018/162178

(56) Entgegenhaltungen:
- WO-A1-2015/149794
- WO-A1-2015/158339
- DE-A1-102010 049 930
- DE-A1-102014 217 470
- DE-A1-102014 217 845
- US-A- 2 096 999
- US-A1- 2016 333 961

## Beschreibung

Die Erfindung betrifft ein Tilgersystem mit einem Tilgermassenträger und mit einer Tilgermasseneinheit, wobei zumindest eine erste Tilgermasse der Tilgermasseneinheit mittels einer ersten Koppeleinheit relativ bewegbar an dem Tilgermassenträger und zumindest eine zweite Tilgermasse der Tilgermasseneinheit mittels einer zweiten Koppeleinheit relativ bewegbar an der zumindest einen ersten Tilgermasse aufgenommen ist, und wobei eine der zumindest zwei Tilgermassen zwei mit festem Axialabstand zueinander angeordnete und mittels Abstandshalter untereinander verbundene Tilgermassenelemente aufweist, die axial zwischen sich die jeweils andere der zumindest zwei Tilgermassen aufnehmen.

Ein derartiges Tilgersystem ist durch die WO 2015/113540 A1 bekannt, wobei eine erste Tilgermasse über zwei mittels Abstandshalter untereinander verbundene Tilgermassenelemente verfügt, die axial zwischen sich sowohl einen Tilgermassenträger als auch eine zweite Tilgermasse aufnehmen. Die Tilgermassenelemente der ersten Tilgermasse sind am Tilgermassenträger im Bereich von zwei in Umfangsrichtung nebeneinander liegenden ersten Kopplungsbereichen auslenkbar getragen, wobei jeder Kopplungsbereich sowohl im Tilgermassenträger als auch in der ersten Tilgermasse eine gekrümmte Führungsbahn mit einem Scheitelbereich umfasst, und die Führungsbahnen von Tilgermassenträger und Tilgermasse jeweils durch ein bolzenartiges Kopplungselement miteinander verbunden sind. Die zweite Tilgermasse ist mittels eines einzelnen Kopplungselementes in einer sich im Wesentlichen in Radialrichtung erstreckenden Führungsbahn der ersten Tilgermasse relativ zu dieser verlagerbar aufgenommen. Durch die zweite Tilgermasse wird eine die Masse der ersten Tilgermasse erhöhende Zusatzmasse gebildet, welche eine verbesserte Tilgung mit erhöhtem Drehmoment bewirken soll. Eine Auslegung der Eigenschwingungsfrequenz der zweiten Tilgermasse auf eine andere Ordnung als die Eigenschwingungsfrequenz der ersten Tilgermasse ist dagegen nicht vorgesehen.

Die DE 10 2010 049 930 A1 zeigt unterschiedliche Varianten eines über zwei Tilgermassen verfügenden Tilgersystems. In einer schematisch dargestellten ersten Variante ist eine als Pendel ausgebildete erste Tilgermasse an einem Tilgermassenträger und eine als Pendel ausgebildete zweite Tilgermasse an der ersten Tilgermasse aufgenommen. Bei einer ebenfalls schematisch dargestellten zweiten Variante ist eine erste Tilgermasse über erste Koppelelemente an einem nicht gezeigten Tilgermassenträger angebunden, und eine zweite Tilgermasse über zweite Koppelelemente an der ersten Tilgermasse. Aufgrund der lediglich schematischen Darstellung ist nicht nachvollziehbar, in welcher Weise der Tilgermassenträger mit der ersten Tilgermasse und diese wiederum mit der zweiten Tilgermassen zusammenwirkt, und auch die konstruktive Ausbildung von Tilgermassenträger und Tilgermassen bleibt offen. Schließlich zeigt eine dritte Variante zwei unterschiedliche Tilgermassen beidseits eines Tilgermassenträgers, was einen hohen axialen Bauraumbedarf zur Folge hat.

Die DE 10 2014 217 845 A1 lässt ein Tilgersystem erkennen, bei welchem ein Tilgermassenträger über radial verlagerbare Tilgermassenaufnehmer verfügt, an denen Tilgermassen relativ bewegbar gelagert sind. Die Tilgermassenaufnehmer sind, bezogen auf den Tilgermassenträger, mittels Energiespeichern radial vorgespannt. Ziel dieser Maßnahme ist das Bewirken einer drehzahlabhängigen Änderung der Tilgerordnung infolge drehzahlabhängiger Radialverschiebung des Anlenkpunktes der Tilgermassen.

Beim Tilgersystem der US 2,096,999 A sind Tilgermassen an Parallelarmen aufgenommen, die drehfest mit Kupplungskörpern verbunden sind, die zur begrenzt drehelastischen Verbindung einer Kurbelwelle mit einer Abtriebswelle dienen.

Ein weiteres Tilgersystem ist aus der DE 10 2010 049 930 A1 bekannt. Der Tilgermassenträger ist an einem Antrieb, wie der Kurbelwelle einer Brennkraftmaschine, drehfest aufgenommen, und trägt Halteeinrichtungen für axial beidseits des Tilgermassenträgers jeweils vorgesehene Tilgermasseneinheiten. Jede dieser Tilgermasseneinheiten weist zwei Tilgermassenelemente der ersten Tilgermassen auf, die mittels an den Halteeinrichtungen des Tilgermassenträgers aufgenommenen Abstandshaltern in festen Axialabständen zueinander gehalten sind. Axial zwischen den je weils zwei Tilgermassenelementen der ersten Tilgermassen ist jeweils eine zweite Tilgermasse aufgenommen und axial positioniert. Der Tilgermassenträger weist zur relativ bewegbaren Aufnahme der jeweils zwei Tilgermassenelemente der ersten Tilgermassen Ausnehmungen auf, in welchen Koppelelemente der ersten Koppeleinheit geführt sind. Die Koppelelemente der ersten Koppeleinheit greifen weiterhin in erste Aussparungen der jeweils zwei Tilgermassenelemente der ersten Tilgermassen ein. Die jeweils zwei Tilgermassenelemente der ersten Tilgermassen verfügen darüber hinaus über zweite Aussparungen, in welche Koppelelemente der zweiten Koppeleinheit eingreifen. Weiterhin stehen die Koppelelemente der zweiten Koppeleinheit in Eingriff mit Ausnehmungen der zweiten Tilgermassen.

Durch Anordnung des Tilgermassenträgers sowie der ersten und der zweiten Tilgermasseneinheit in Achsrichtung hintereinander wird ein erheblicher axialer Bauraum zur Unterbringung der wesentlichen Komponenten des Tilgersystems benötigt. Der Vorteil dieses Tilgersystems, nämlich die Tilgung zweier unterschiedlicher Anregungen des Antriebs, muss demnach durch einen erheblichen axialen Bauraumbedarf erkauft werden.

Der Erfindung liegt die Aufgabe zugrunde, ein Tilgersystem so auszubilden, dass es bei geringem axialen Bauraumbedarf dazu befähigt ist, unterschiedlichen Anregungen eines Antriebs, wie einer Brennkraftmaschine, entgegen zu wirken.

Diese Aufgabe wird durch ein Tilgersystem gemäß dem Anspruch 1 gelöst. Dieses Tilgersystem ist mit einem Tilgermassenträger versehen, der mittels einer ersten Koppeleinheit zur relativ bewegbaren Aufnahme zumindest einer ersten Tilgermasse dient, die mittels einer zweiten Koppeleinheit zur relativ bewegbaren Aufnahme zumindest einer zweiten Tilgermasse vorgesehen ist, wobei eine der zumindest zwei Tilgermassen zwei mit festem Axialabstand zueinander angeordnete und mittels Abstandshalter untereinander verbundene Tilgermassenelemente aufweist, die axial zwischen sich die jeweils andere der zumindest zwei Tilgermassen aufnehmen.

Von besonderer Bedeutung ist, dass der Tilgermassenträger zumindest mit seinem den Tilgermasseneinheiten zugewandten Radialbereich axial zwischen die beiden mittels Abstandshaltern untereinander verbundenen und mit festem Axialabstand zueinander angeordneten Tilgermassenelemente eingreift. Hierdurch wird vermieden, dass sich die Querschnitte der jeweiligen Tilgermasseneinheit und des Tilgermassenträgers addieren. Dies gilt unabhängig davon, ob der Tilgermassenträger einstückig ausgebildet ist, oder zwei mit festem Axialabstand zueinander angeordnete Tilgermassenträgerelemente aufweist. Bei einstückigem Tilgermassenträger greift dieser mit Vorzug nicht nur axial zwischen die beiden mittels Abstandshaltern untereinander verbundenen und mit festem Axialabstand zueinander angeordneten Tilgermassenelemente der einen der beiden Tilgermassen, sondern auch axial zwischen die zwei mittels Abstandshaltern untereinander verbundene und mit festem Axialabstand zueinander angeordnete Tilgermassenelemente der anderen der beiden Tilgermassen. Bei Tilgermassenträgern, die über zwei mit festem Axialabstand zueinander angeordnete Tilgermassenträgerelemente verfügen, greifen die Tilgermassenträgerelemente dagegen mit Vorzug axial zwischen die zwei mittels Abstandshaltern untereinander verbundenen und mit festem Axialabstand zueinander angeordneten Tilgermassenelemente, nehmen aber die zumindest eine andere Tilgermasse axial zwischen sich auf.

Die Erfindung ist nachfolgend anhand von Ausführungsbeispielen näher erläutert. Es zeigt:
Fig. 1 eine hydrodynamische Kopplungsvorrichtung im Längsschnitt mit einem Tilgersystem;
Fig. 2 eine Herauszeichnung des Tilgersystems in Draufsicht mit Tilgermasseneinheiten, bei denen sowohl eine erste Tilgermasse in Neutral-Relativlage in Bezug zu einem Tilgermassenträger steht, der über zwei mit Axialabstand zueinander angeordnete Tilgermassenträgerelemente verfügt, und eine zweite Tilgermasse in Neutral-Relativlage in Bezug zur ersten Tilgermasse, mit Anordnung der zweiten Tilgermasse axial zwischen zwei mit Axialabstand zueinander angeordneten Tilgermassenelementen der ersten Tilgermasse;
Fig. 3 eine Ansicht des Tilgersystems der Fig. 2 entlang der Schnittlinie A - A in Fig. 2;
Fig. 4 eine Herauszeichnung einer Tilgermasseneinheit mit der ersten Tilgermasse, die über axial zueinander beabstandete Tilgermassenelemente verfügt, und mit der zweiten Tilgermasse, die in Achsrichtung zwischen den Tilgermassenelementen der ersten Tilgermasse angeordnet ist;
Fig. 5 eine Herauszeichnung der zweiten Tilgermasse;
Fig. 6 wie Fig. 2, aber mit Auslenkung der zweiten Tilgermasse aus ihrer Neutral-Relativlage in Bezug zur ersten Tilgermasse;
Fig. 7 wie Fig. 2, aber mit Anordnung der beiden mit Axialabstand zueinander angeordneten Tilgermassenelemente der ersten Tilgermasse axial zwischen zwei ebenfalls mit Axialabstand zueinander angeordneten Tilgermassenelementen der zweiten Tilgermasse;
Fig. 8 eine Ansicht des Tilgersystems der Fig. 7 entlang der Schnittlinie A - A in Fig. 7;
Fig. 9 das Tilgersystem der Fig. 7 und 8 in räumlicher Darstellung;
Fig. 10 wie Fig. 7, aber mit anderer Schnittdarstellung im Bereich der Tilgermassenelemente der ersten Tilgermasse;
Fig. 11 wie Fig. 2, aber mit einstückiger Ausbildung des Tilgermassenträgers;
Fig. 12 eine Ansicht des Tilgersystems der Fig. 11 entlang der Schnittlinie A - A in Fig. 2 in Fig. 11;
Fig. 13 das Tilgersystem der Fig. 11 und 12 in räumlicher Darstellung.

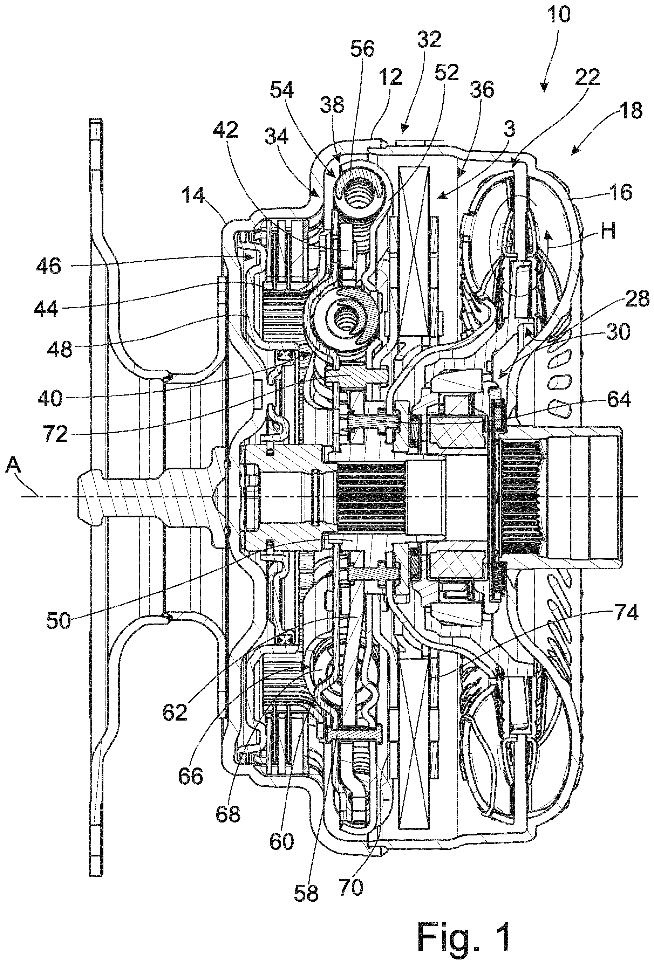

In Fig. 1 ist eine hydrodynamische Kopplungsvorrichtung 10, hier ausgebildet als hydrodynamischer Drehmomentwandler, im Längsschnitt dargestellt. Die hydrodynamische Kopplungsvorrichtung 10 umfasst ein Gehäuse 12 mit einer antriebsseitigen Gehäuseschale 14, die mit einer als Antrieb wirksamen, nicht gezeigten Kurbelwelle einer Brennkraftmaschine verbindbar ist, und mit einer abtriebsseitigen Gehäuseschale 16. Das Gehäuse 12 ist zur Drehung um eine Drehachse A antreibbar, verfügt über ein Pumpenrad 18 und umgibt ein Turbinenrad 22, das axial zwischen sich und dem Pumpenrad 18 ein Leitrad 28 aufnehmen. Das Leitrad 28 ist über eine Freilaufanordnung 30 auf einer nicht dargestellten Stützhohlwelle in einer Drehrichtung um die Drehachse A drehbar getragen. Durch das Pumpenrad 18, das Turbinenrad 22 und das Leitrad 28 wird mit dem im Gehäuse 12 vorhandenen Fluid, im Allgemeinen Öl, ein hydrodynamischer Kreislauf H entwickelt, der zur Drehmomentenübertragung genutzt werden kann.

Im Inneren des Gehäuses 12 ist ferner eine Schwingungsdämpfungsanordnung 32 vorgesehen. Diese umfasst im Wesentlichen axial nebeneinander liegend eine Torsionsdämpferanordnung 34, und ein Tilgersystem 36, auf das nachfolgend noch ausführlich eingegangen wird.

Die Torsionsdämpferanordnung 34 umfasst radial gestaffelt zueinander zwei Torsionsschwingungsdämpfer 38, 40. Der radial weiter außen positionierte erste Torsionsschwingungsdämpfer 38 umfasst eine beispielsweise als Zentralscheibenelement ausgebildete erste Primärseite 42, die beispielsweise mit einem Innenlamellenträger 44 einer Überbrückungskupplung 46 verbunden sein kann. Die am Innenlamellenträger 44 getragenen abtriebsseitigen Innenlamellen können durch einen Kupplungskolben 48 mit am Gehäuse 12 bzw. der antriebsseitigen Gehäuseschale 14 drehfest gehaltenen antriebsseitigen Außenlamellen in Reibeingriff gebracht werden und damit die Überbrückungskupplung 46 in einen Einrückzustand gebracht werden, in welchem unter Überbrückung des hydrodynamischen Kreislaufs H ein Drehmoment direkt, also mechanisch, zwischen dem Gehäuse 12 und einer als Abtriebsorgan wirksamen Abtriebsnabe 50 übertragen werden kann.

Eine erste Sekundärseite 52 des radial weiter außen positionierten ersten Torsionsschwingungsdämpfers 38 umfasst zwei beidseits der ersten Primärseite 42 positionierte Deckscheibenelemente. Zumindest eines davon bildet in einem radial äußeren Bereich Abstützbereiche für eine erste Dämpferelementenanordnung 54. Diese erste Dämpferelementenanordnung 54 umfasst eine Mehrzahl von in Umfangsrichtung aufeinander folgenden und bezüglich der ersten Primärseite 42 einerseits und der ersten Sekundärseite 52 andererseits abgestützten bzw. abstützbaren ersten Dämpferelementeneinheiten 56. Jede dieser ersten Dämpferelementeneinheiten 56 kann ein oder mehrere Dämpferelemente, also beispielsweise Schraubendruckfedern, umfassen.

In ihrem radial inneren Bereich bilden die beiden miteinander beispielsweise durch Nietbolzen 58 fest miteinander verbundenen Deckscheibenelemente eine zweite Primärseite 60 des weiter radial innen positionierten zweiten Torsionsschwingungsdämpfers 40. Eine zweite Sekundärseite 62 des zweiten Torsionsschwingungsdämpfers 40 ist beispielsweise nach Art eines Zentralscheibenelements ausgebildet und ist in ihrem radial inneren Bereich beispielsweise durch Nietbolzen 64 mit der Abtriebsnabe 50 fest verbunden. Zusammen mit der zweiten Sekundärseite 62 kann auch das Turbinenrad 22 durch die Nietbolzen 64 oder ggf. auch separat mit der Abtriebsnabe 50 verbunden sein. Eine zweite Dämpferelementenanordnung 66 des zweiten Torsionsschwingungsdämpfers 40 umfasst eine Mehrzahl von in Umfangsrichtung aufeinander folgenden zweiten Dämpferelementeneinheiten 68. Auch diese können jeweils ein oder mehrere ineinander geschachtelte oder ggf. in Umfangsrichtung aufeinander folgende Dämpferelemente, beispielsweise Schraubendruckfedern, umfassen. Die zweiten Dämpferelementeneinheiten 68 stützen sich in Umfangsrichtung an jeweiligen Abstützbereichen der zweiten Primärseite 60 und der zweiten Sekundärseite 62 ab.

Bei den beiden Torsionsschwingungsdämpfern 38, 40 können sich die jeweiligen Primärseiten 42, 60 bezüglich der jeweiligen Sekundärseiten 52, 62 unter Erzeugung einer Rückstellwirkung der jeweiligen Dämpferelementenanordnungen 54, 66 um die Drehachse A ausgehend von einer im drehmomentenfreien Zustand vorliegenden Neutral-Relativdrehlage bezüglich einander drehen. Dabei wird das von einem Antrieb in das Gehäuse 12 eingeleitete Drehmoment über die Überbrückungskupplung 46, die erste Primärseite 42, die erste Dämpferelementenanordnung 54, die erste Sekundärseite 52, die zweite Primärseite 60, die zweite Dämpferelementenanordnung 66, die zweite Sekundärseite 62 auf die Abtriebsnabe 50 und beispielsweise auf einen Abtrieb in Form einer nicht gezeigten Getriebeeingangswelle übertragen.

Das bereits erwähnte Tilgersystem 36 umfasst ein beispielsweise ringscheibenartig ausgebildetes antriebsseitiges Tilgermassenträgerelement 70 eines Tilgermassenträgers 3, das beispielsweise in seinem radial inneren Bereich durch Nietbolzen 72 an die beiden Deckscheibenelemente im Bereich radial innerhalb der zweiten Dämpferelementenanordnung 66 fest angebunden ist, so dass die beiden die erste Sekundärseite 52 und die zweite Primärseite 60 bereitstellenden Deckscheibenelemente zusammen mit dem Tilgersystem 36 im Wesentlichen eine Zwischenmassenanordnung der beiden Torsionsschwingungsdämpfer 38, 40 bereitstellen. Das Tilgersystem 36 weist darüber hinaus ein ebenfalls beispielsweise ringscheibenartig ausgebildetes abtriebsseitiges Tilgermassenträgerelement 74 auf, das mit dem antriebsseitigen Tilgermassenträgerelement 70 zur Bildung des Tilgermassenträgers 3 fest verbunden ist. Ansonsten ist das Tilgersystem 36 in Fig. 1 lediglich schematisch dargestellt, und soll in den nachfolgenden Figuren ausführlich erläutert werden.

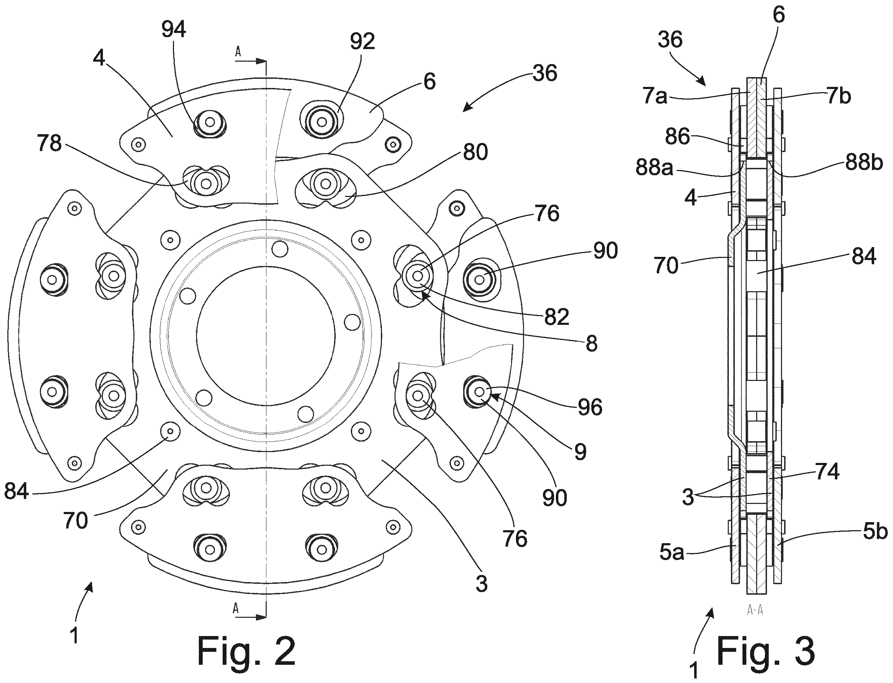

Wie die Ausführung des Tilgersystems 36 gemäß Fig. 2 und 3 zeigt, sind am Tilgermassenträger 3 in Umfangsrichtung aufeinander folgend mehrere Tilgermasseneinheiten 1 mit ersten Tilgermassen 4 und mit zweiten Tilgermassen 6 getragen. Jede der ersten Tilgermassen 4 ist am Tilgermassenträger 3 im Bereich von zwei in Umfangsrichtung nebeneinander liegenden ersten Kopplungsbereichen 76 auslenkbar getragen. Jeder dieser Kopplungsbereiche 76 umfasst in der ersten Tilgermasse 4 eine gekrümmte Führungsbahn 78 mit radial innen liegendem Scheitelbereich und im Tilgermassenträger 3 eine gekrümmte Führungsbahn 80 mit radial außen liegendem Scheitelbereich. Ein bolzenartiges Kopplungselement 82 ist so positioniert, dass es beispielsweise unter Abrollbewegung entlang der Führungsbahn 78 in der Tilgermasse 4 und der Führungsbahn 80 im Tilgermassenträger 3 bewegt werden kann. Die Kopplungselemente 82 jedes Kopplungsbereiches 76 bilden zusammen mit den Führungsbahnen 78 der jeweiligen ersten Tilgermasse 4 und den Führungsbahnen 80 des Tilgermassenträgers 3 eine erste Koppeleinheit 8.

Wie bereits erwähnt, verfügt der Tilgermassenträger 3 über ein antriebsseitiges Tilgermassenträgerelement 70 und ein abtriebsseitiges Tilgermassenträgerelement 74, das mit festem Axialabstand gegenüber dem antriebsseitigen Tilgermassenträgerelement 70 angeordnete und mittels Distanzhaltern 84 untereinander verbunden sind. Jedes der Tilgermassenträgerelementen 70, 74 ist mit den Führungsbahnen 80 für die Kopplungselemente 82 ausgebildet, was aus Fig. 3 aufgrund einer anderen Schnittebene allerdings nicht hervorgeht.

Wie die Fig. 2 bis 4 zeigen, weisen die ersten Tilgermassen 4 jeweils zwei Tilgermassenelemente 5a und 5b auf, die mit festem Axialabstand zueinander angeordnet und mittels Abstandshaltern 86 untereinander verbunden sind. Der Axialabstand der Tilgermassenelemente 5a, 5b der ersten Tilgermassen 4 ist hierbei so ausgelegt, dass die Tilgermassenträgerelemente 70 und 74 des Tilgermassenträgers 3 zumindest mit ihren den ersten Tilgermassen 4 zugewandten Radialbereichen 88a, 88b axial zwischen die Tilgermassenelemente 5a, 5b der ersten Tilgermassen 4 eingreifen.

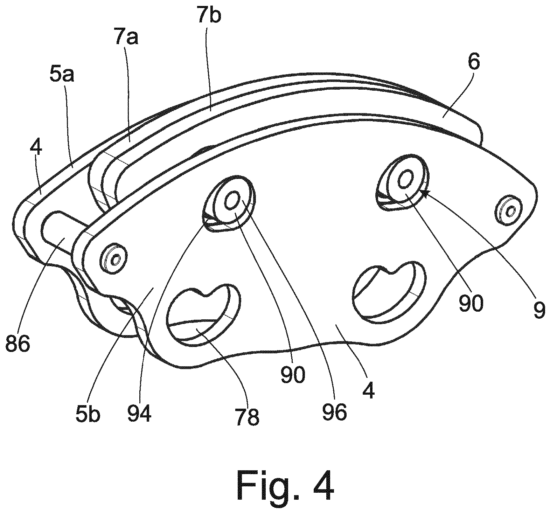

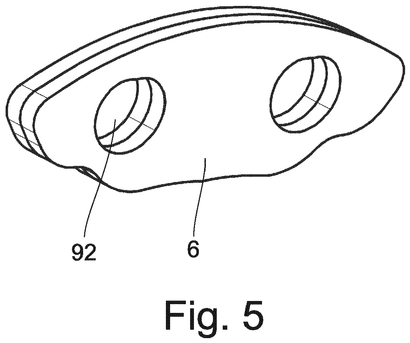

Die zusätzlich zu den ersten Tilgermassen 4 vorgesehenen zweiten Tilgermassen 6 sind im Bereich von zwei in Umfangsrichtung nebeneinander liegenden zweiten Kopplungsbereichen 90 auslenkbar an den Tilgermassenelementen 5a, 5b der jeweils zugeordneten ersten Tilgermassen 4 getragen. Jeder dieser Kopplungsbereiche 90 umfasst in der zweiten Tilgermasse 6 eine gekrümmte Führungsbahn 92 (Fig. 2 und 5) mit radial innen liegendem Scheitelbereich und in den Tilgermassenelementen 5a, 5b der jeweils zugeordneten ersten Tilgermassen 4 eine gekrümmte Führungsbahn 94 (Fig. 2 und 4) mit radial außen liegendem Scheitelbereich. Jeweils ein bolzenartiges Kopplungselement 96 ist so positioniert, dass es beispielsweise unter Abrollbewegung entlang der Führungsbahnen 92 in der zweiten Tilgermasse 6 und den Führungsbahnen 94 in den Tilgermassenelementen 5a, 5b der jeweils zugeordneten ersten Tilgermassen 4 bewegt werden kann. Die Kopplungselemente 96 jedes Kopplungsbereiches 90 bilden zusammen mit den Führungsbahnen 92 der jeweiligen zweiten Tilgermasse 6 und den Führungsbahnen 94 der die zweite Tilgermasse 6 jeweils aufnehmenden ersten Tilgermasse 4 eine zweite Koppeleinheit 9.

Die zweiten Tilgermassen 6 sind, wie insbesondere Fig. 3 und 4 erkennen lassen, axial zwischen den Tilgermassenelementen 5a, 5b der jeweils zugeordneten ersten Tilgermassen 4 angeordnet, und befinden sich weiterhin in einem Axialbereich zwischen den beiden Tilgermassenträgerelementen 70 und 74 des Tilgermassenträgers 3. Dadurch ist der Bewegungsbereich der zweiten Tilgermassen 6 bei einer Bewegung relativ zu den ersten Tilgermassen 4 nach radial innen nicht durch die Radialbereiche 88a, 88b der Tilgermassenträgerelemente 70 und 74 begrenzt. Weiterhin ist aus Fig. 3 und 4 erkennbar, dass die Tilgermassen 6 in Achsrichtung durch eine Mehrzahl von Tilgermassenelementen 7a, 7b gebildet sein können, wobei die Tilgermassenelemente 7a, 7b in axialer Anlage aneinander stehen in nicht dargestellter Weise miteinander verbunden sein können.

Durch Fliehkrafteinwirkung werden die Tilgermassen 4 und 6 nach radial außen beaufschlagt, um in eine in Fig. 2 dargestellte Neutral-Relativlage bezüglich des Tilgermassenträgers 3 zu gelangen. Die Kopplungselemente 82 befinden sich dann in den Scheitelbereichen der einander zugeordneten gekrümmten Führungsbahnen 78, 80, und die Kopplungselemente 96 in den Scheitelbereichen der einander zugeordneten gekrümmten Führungsbahnen 92, 94. Die Tilgermassen 4 und 6 nehmen in der Neutral-Relativlage ihre am weitesten radial außen liegende Position ein.

Bei Auftreten von Drehungleichförmigkeiten einer ersten Ordnung werden zumindest im Wesentlichen die ersten Tilgermassen 4 in Umfangsrichtung bezüglich des Tilgermassenträgers 3 beschleunigt. Dabei bewegen sich die Kopplungselemente 82 aus den Scheitelbereichen der Führungsbahnen 78, 80 heraus und zwingen dadurch die Tilgermassen 4 im Rahmen einer Schwingungsbewegung aufgrund des Fliehpotentials nach radial innen. Durch Auslegung der Masse der ersten Tilgermassen 4 einerseits und der Krümmung bzw. Länge der Führungsbahnen 78, 80 andererseits wird die Abstimmung der Eigenschwingungsfrequenz der Tilgermassen 4 auf eine anregende Ordnung erzielt.

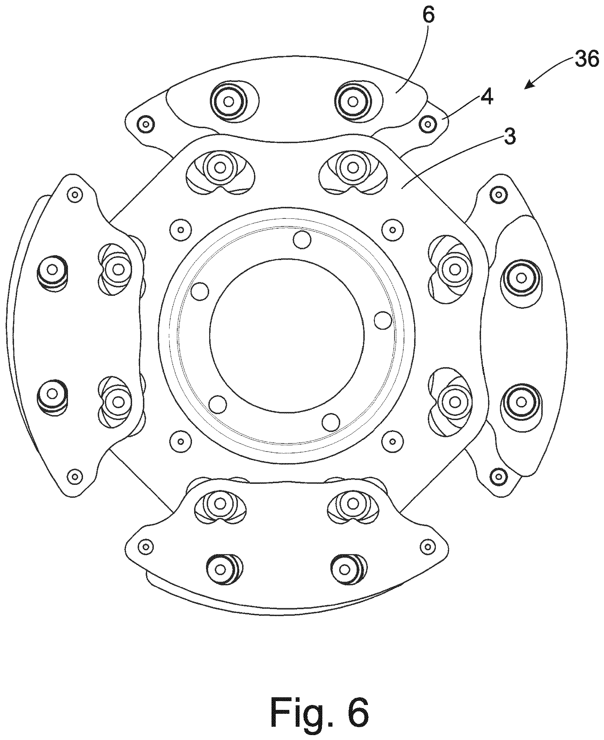

Ebenso erfolgt die Auslegung der Masse der zweiten Tilgermassen 6 einerseits und der Krümmung bzw. Länge der Führungsbahnen 92, 94 andererseits derart, dass die Abstimmung der Eigenschwingungsfrequenz der zweiten Tilgermassen 6 ebenfalls auf eine anregende Ordnung vorgenommen wird. Mit besonderem Vorzug erfolgt auf diese Weise eine Auslegung der Tilgermassen 4 auf eine andere Ordnung als die Tilgermassen 6, so dass die Tilgermassen 4 und 6 bei Anregungen unterschiedlicher Ordnung eine Auslenkung in Umfangsrichtung erfahren. So werden beispielsweise bei Auftreten von Drehungleichförmigkeiten einer ersten Ordnung die ersten Tilgermassen 4 gegenüber dem Tilgermassenträger 3 in Umfangsrichtung zumindest im Wesentlichen beschleunigt, während die zweiten Tilgermassen 6 in Umfangsrichtung zumindest im Wesentlichen keine Beschleunigung gegenüber den ersten Tilgermassen 4 erfahren. Bei Auftreten von Drehungleichförmigkeiten einer zweiten Ordnung werden dagegen die ersten Tilgermassen 4 gegenüber dem Tilgermassenträger 3 in Umfangsrichtung zumindest im Wesentlichen nicht beschleunigt, während die zweiten Tilgermassen 6 in Umfangsrichtung zumindest im Wesentlichen eine Beschleunigung gegenüber den ersten Tilgermassen 4 erfahren. Eine Auslenkung der zweiten Tilgermassen 6 relativ zu den ersten Tilgermassen 4 in Uhrzeigerrichtung ist in Fig. 6 gezeigt.

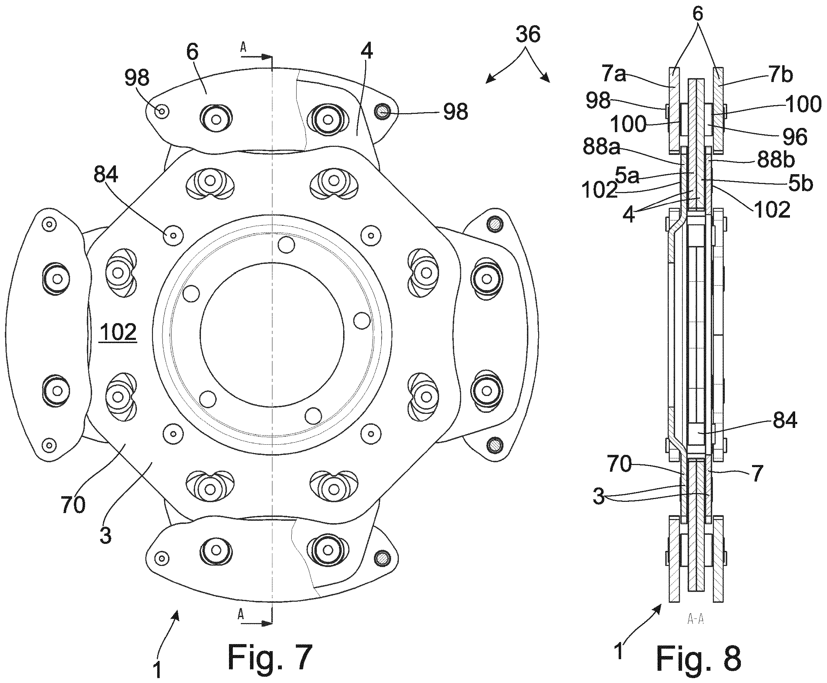

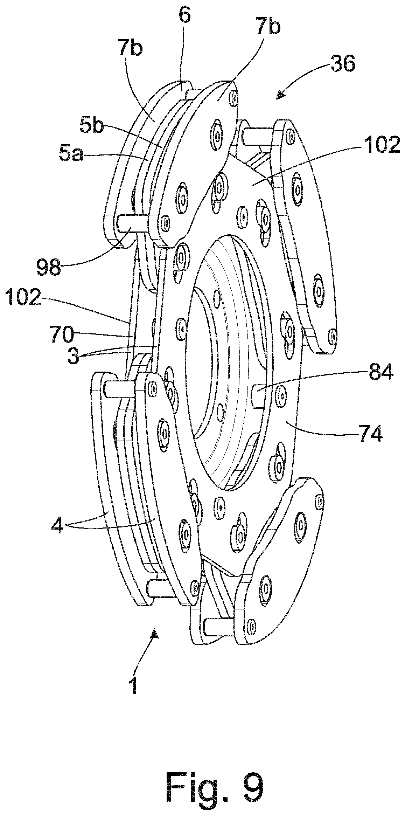

Wie die Ausführung des Tilgersystems 36 gemäß Fig. 7 bis 10 zeigt, sind an den über Distanzhalter 84 mit festem Axialabstand zueinander angeordneten Tilgermassenträgerelementen 70, 74 des Tilgermassenträgers 3 die Tilgermasseneinheiten 1 in von den Fig. 2 bis 6 abweichender Weise aufgenommen. Bei der jetzt vorliegenden Ausführung sind nämlich die über Tilgermassenelemente 5a, 5b verfügenden ersten Tilgermassen 4 axial zwischen den Radialbereichen 88a, 88b der Tilgermassenträgerelemente 70 und 74 des Tilgermassenträgers 3 aufgenommen, so dass diesen Tilgermassen 4 ein Bewegungsbereich zur Verfügung steht, der nach radial innen durch die Radialbereiche 88a, 88b der Tilgermassenträgerelemente 70 und 74 nicht begrenzt ist. Im Gegensatz dazu befinden sich die ebenfalls mit Tilgermassenelementen 7a, 7b ausgebildeten zweiten Tilgermassen 6, bei denen die Tilgermassenelemente 7a, 7b über Abstandshalter 98 in festem Axialabstand zueinander gehalten sind, an den von den Tilgermassenelementen 5a, 5b der ersten Tilgermassen 4 abgewandten axialen Außenseiten 102 der Tilgermassenträgerelemente 70 und 74 des Tilgermassenträgers 3. Auch für diese Tilgermassen 6 gilt, dass diesen ein Bewegungsbereich zur Verfügung steht, der nach radial innen durch die Radialbereiche 88a, 88b der Tilgermassenträgerelemente 70 und 74 nicht begrenzt ist. Anders als die Tilgermassenelemente 7a, 7b der zweiten Tilgermassen 4 können die Tilgermassenelemente 5a, 5b der ersten Tilgermassen 4 axial unmittelbar aneinander zur Anlage gelangen. Zu ergänzen wäre weiterhin, dass die Kopplungselemente 96 in Achsrichtung mehrstufig ausgebildet sein können, so dass ein solcher Stufenübergang 100 genutzt werden kann, um die Tilgermassenelemente 7a, 7b der zweiten Tilgermassen 6 axial in fester Zuordnung zu den Tilgermassenelementen 5a, 5b der ersten Tilgermassen 4 zu positionieren.

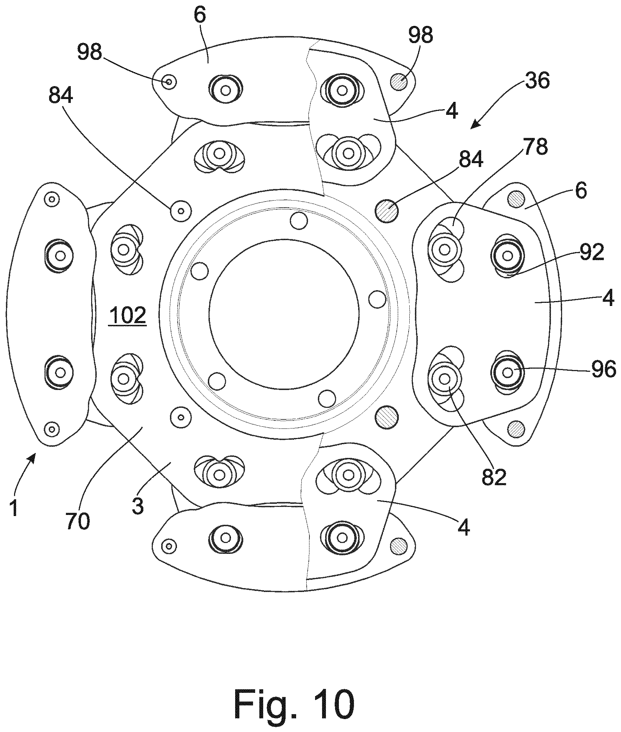

Während bei den Fig. 7 bis 9 die Schnittdarstellungen so gelegt sind, dass die Tilgermassenelemente 5a, 5b der ersten Tilgermassen 4 jeweils nur teilweise sichtbar sind, ist der Schnitt in Fig. 10 so geführt, dass eine Tilgermasse 4 komplett dargestellt ist, und zwei Tilgermassen 4 jeweils hälftig. Auf diese Weise ist erkennbar, dass auch bei dieser Ausführung des Tilgersystems 36 die Tilgermassenelemente 5a, 5b der ersten Tilgermassen 4 die Führungsbahnen 78 und 92 ebenso wie die darin geführten Kopplungselemente 82 und 96 mit Radialversatz zueinander vorgesehen sind.

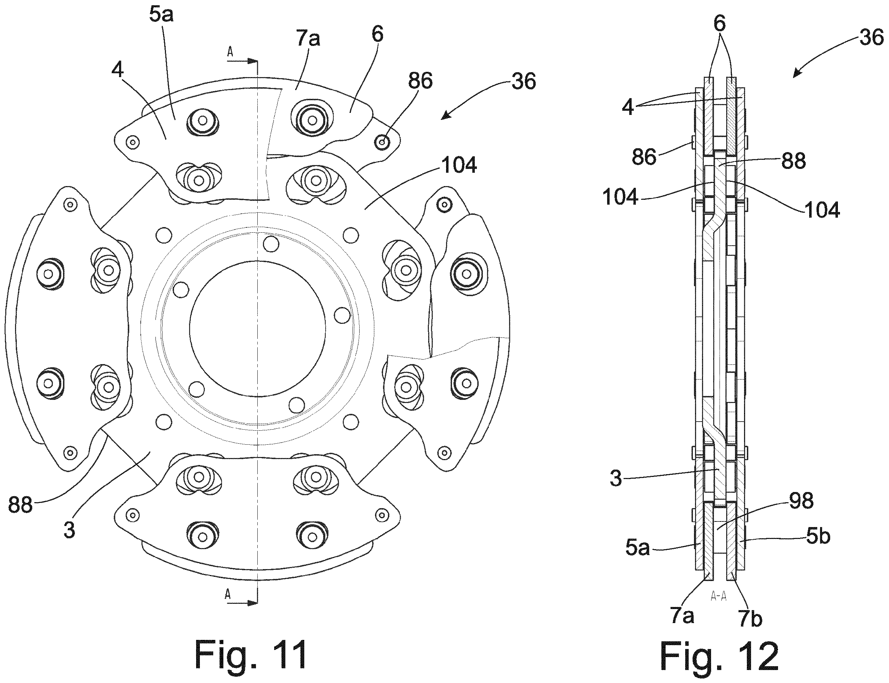

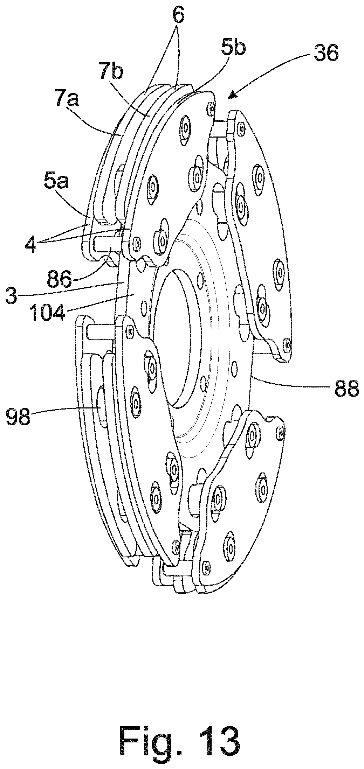

In den Fig. 11 bis 13 ist eine Ausführung des Tilgersystems 36 gezeigt, bei welcher das Tilgermassenelement 3 einstückig ist, und mit einem äußeren Radialbereich 88 axial zwischen die Tilgermassen 4 und 6 eingreift. Da sowohl die Tilgermassenelemente 5a, 5b der Tilgermassenelemente 4 als auch die Tilgermassenelemente 7a, 7b der Tilgermassenelemente 6 jeweils axial beidseits des Tilgermassenträgers 3 angeordnet sind, werden zwischen den Tilgermassenelementen 5a, 5b Abstandshalter 86 und zwischen den Tilgermassenelementen 7a, 7b Abstandshalter 98 angeordnet, um sowohl die Tilgermassenelemente 5a, 5b als auch die Tilgermassenelementen 7a, 7b jeweils in festem Axialabstand zueinander zu halten. Die Tilgermassenelemente 5a, 5b der Tilgermassen 4 nehmen dabei die Tilgermassenelemente 7a, 7b der Tilgermassen 6 axial zwischen sich auf, so dass die Abstandshalter 86 zwischen den Tilgermassenelementen 5a, 5b selbstverständlich über eine größere Axialerstreckung verfügen als die Abstandshalter 98 der Tilgermassenelemente 7a, 7b. Während die Tilgermassenelemente 5a, 5b aufgrund ihrer Anordnung axial außerhalb der Tilgermassenelemente 7a, 7b ohnehin über einen ungehinderten Bewegungsbereich nach radial innen verfügen, ist auch bei den Tilgermassenelementen 7a, 7b aufgrund von deren Anordnung axial beidseits von Außenseiten 104 des Radialbereiches 88 des Tilgermassenträgers 3 dafür gesorgt, dass ein Bewegungsbereich zur Verfügung steht, der nach radial innen durch den Radialbereich 88 des Tilgermassenträgers 3 nicht begrenzt ist.

### Bezugszeichen

- 1: Tilgermasseneinheit
- 3: Tilgermassenträger
- 4: erste Tilgermasse
- 5: erste Tilgermassenelemente
- 6: zweite Tilgermasse
- 7: zweite Tilgermassenelemente
- 8: erste Koppeleinheit
- 9: zweite Koppeleinheit
- 10: hydrodynamische Kopplungsvorrichtung
- 12: Gehäuse
- 14: antriebsseitige Gehäuseschale 14
- 16: abtriebsseitige Gehäuseschale
- 18: Pumpenrad
- 22: Turbinenrad
- 28: Leitrad
- 30: Freilaufanordnung
- 32: Schwingungsdämpfungsanordnung
- 34: Torsionsdämpferanordnung
- 36: Tilgersystem
- 38: Torsionsschwingungsdämpfer
- 40: Torsionsschwingungsdämpfer
- 42: erste Primärseite der Torsionsdämpferanordnung
- 44: Innenlamellenträger
- 46: Überbrückungskupplung
- 48: Kupplungskolben
- 50: Abtriebsnabe
- 52: erste Sekundärseite
- 54: erste Dämpferelementenanordnung 54
- 56: erste Dämpferelementeneinheiten
- 58: Nietbolzen
- 60: zweite Primärseite
- 62: zweite Sekundärseite
- 64: Nietbolzen
- 66: zweite Dämpferelementenanordnung
- 68: zweite Dämpferelementeneinheiten
- 70: antriebsseitiges Tilgermassenträgerelement
- 72: Nietbolzen
- 74: abtriebsseitiges Tilgermassenträgerelement
- 76: erste Kopplungsbereiche
- 78: Führungsbahn erste Tilgermasse
- 80: Führungsbahn Tilgermassenträger
- 82: Kopplungselement
- 84: Distanzhalter
- 86: Abstandshalter
- 88: Radialbereiche
- 90: zweite Kopplungsbereiche
- 92: Führungsbahn zweite Tilgermasse
- 94: Führungsbahn erste Tilgermasse
- 96: Kopplungselement
- 98: Abstandshalter
- 100: Stufenübergang am Kopplungselement
- 102: axiale Außenseite des Tilgermassenträgerelements
- 104: axiale Außenseite des Tilgermassenträgers

## Patentansprüche

1. Tilgersystem (36) mit einem Tilgermassenträger (3) und mit einer Tilgermasseneinheit (1), wobei zumindest eine erste Tilgermasse (4) mittels einer ersten Koppeleinheit (8) relativ bewegbar an dem Tilgermassenträger (3) und zumindest eine zweite Tilgermasse (6) mittels einer zweiten Koppeleinheit (9) relativ bewegbar an der zumindest einen ersten Tilgermasse (4) aufgenommen ist, und wobei eine (4; 6) der zumindest zwei Tilgermassen (4, 6) mit festem Axialabstand zueinander angeordnete und mittels Abstandshalter (86; 98) untereinander verbundene Tilgermassenelemente (5a, 5b; 7a, 7b) aufweist, die axial zwischen sich die jeweils andere (4; 6) der zumindest zwei Tilgermassen (4, 6) aufnehmen, wobei der Tilgermassenträger (3) zumindest mit seinem der Tilgermasseneinheit (1) zugewandten Radialbereich (88a, 88b; 88) axial zwischen die beiden mittels Abstandshaltern (86;98) untereinander verbundenen und mit festem Axialabstand zueinander angeordneten Tilgermassenelemente (5a, 5b; 7a, 7b) eingreift, **dadurch gekennzeichnet, dass** jede der ersten Tilgermassen (4) am Tilgermassenträger (3) im Bereich von zwei in Umfangsrichtung nebeneinander liegenden ersten Kopplungsbereichen (76) auslenkbar getragen ist und jeder dieser Kopplungsbereiche (76) in der ersten Tilgermasse (4) eine gekrümmte Führungsbahn (78) mit radial innen liegendem Scheitelbereich und im Tilgermassenträger (3) eine gekrümmte Führungsbahn (80) mit radial außen liegendem Scheitelbereich umfasst, und ein Kopplungselement (82) so positioniert ist, dass es unter Abrollbewegung entlang der Führungsbahn (78) in der Tilgermasse (4) und der Führungsbahn (80) im Tilgermassenträger (3) bewegt werden kann, und dass die zusätzlich zu den ersten Tilgermassen (4) vorgesehenen zweiten Tilgermassen (6) im Bereich von zwei in Umfangsrichtung nebeneinander liegenden zweiten Kopplungsbereichen (90) auslenkbar an den Tilgermassenelementen (5a, 5b) der jeweils zugeordneten ersten Tilgermassen (4) getragen sind, und jeder dieser Kopplungsbereiche (90) in der zweiten Tilgermasse (6) eine gekrümmte Führungsbahn (92) mit radial innen liegendem Scheitelbereich und in den Tilgermassenelementen (5a, 5b) der jeweils zugeordneten ersten Tilgermassen (4) eine gekrümmte Führungsbahn (94) mit radial außen liegendem Scheitelbereich umfasst, und ein Kopplungselement (96) so positioniert ist, dass es unter Abrollbewegung entlang der Führungsbahnen (92) in der zweiten Tilgermasse (6) und den Führungsbahnen (94) in den Tilgermassenelementen (5a, 5b) der jeweils zugeordneten ersten Tilgermassen (4) bewegt werden kann, wobei die Auslegung der Masse der zweiten Tilgermassen (6) einerseits und der Führungsbahnen (92, 94) der Tilgermassen (6, 4) andererseits derart erfolgt, dass die Abstimmung der Eigenschwingungsfrequenz der ersten Tilgermassen (4) auf eine andere Ordnung als die zweiten Tilgermassen (6) erfolgt.

2. Tilgersystem (36) nach Anspruch 1, **dadurch gekennzeichnet, dass** der Tilgermassenträger (3) über eine Mehrzahl von mit festem Axialabstand zueinander angeordnete und mittels Distanzhaltern (84) untereinander verbundene Tilgermassenträgerelemente (70, 74) verfügt, die beide axial zwischen die mittels Abstandshaltern (86; 98) untereinander verbundenen und mit festem Axialabstand zueinander angeordneten Tilgermassenelemente (5a, 5b; 7a, 7b) zumindest einer der Tilgermassen (4; 6) eingreifen.

3. Tilgersystem (36) nach Anspruch 2, **dadurch gekennzeichnet, dass** die axial zwischen den zumindest zwei Tilgermassenelementen (5a, 5b; 7a, 7b) aufgenommene zumindest eine weitere Tilgermasse (4; 6) axial zwischen den beiden Tilgermassenträgerelementen (70; 74) vorgesehen ist.

4. Tilgersystem (36) nach Anspruch 1, **dadurch gekennzeichnet, dass** die zumindest eine erste Tilgermasse (4) ebenso wie die zumindest eine zweite Tilgermasse (6) jeweils über Tilgermassenelemente (5a, 5b, 7a, 7b) verfügt, die jeweils mittels Abstandshaltern (86, 98) untereinander verbunden und mit festem Axialabstand zueinander angeordnet sind, und dass der Tilgermassenträger (3) axial zwischen die Tilgermassenelemente (5a, 5b, 7a, 7b) von wenigstens einer der beiden Tilgermassen (4, 6) eingreift.

5. Tilgersystem (36) nach Anspruch 4, **dadurch gekennzeichnet, dass** der Tilgermassenträger (3) sowohl zwischen die Tilgermassenelemente (5a, 5b) der zumindest einen ersten Tilgermasse (4) als auch zwischen die Tilgermassenelemente (7a, 7b) der zumindest einen zweiten Tilgermasse (6) eingreift.

## Claims

1. Absorber system (36) having an absorber-mass carrier (3) and having an absorber-mass unit (1), wherein at least one first absorber mass (4) is accommodated for relative movement on the absorber-mass carrier (3) by means of a first coupling unit (8) and at least one second absorber mass (6) is accommodated for relative movement on the at least one first absorber mass (4) by means of a second coupling unit (9), and wherein one (4; 6) of the at least two absorber masses (4, 6) has absorber-mass elements (5a, 5b; 7a, 7b) which are arranged at a fixed axial distance apart, connected to one another by means of spacers (86; 98) and accommodate axially between them the respectively other one (4; 6) of the at least two absorber masses (4, 6), wherein the absorber-mass carrier (3) has at least its radial region (88a, 88b; 88) which is directed towards the absorber-mass unit (1) engaging axially between the two absorber-mass elements (5a, 5b; 7a, 7b), which are connected to one another by means of spacers (86; 98) and are arranged at a fixed axial distance apart, **characterized in that** each of the first absorber masses (4) are carried on the absorber-mass carrier (3) such that they can be deflected in the region of two first coupling regions (76), which are located one beside the other in the circumferential direction, and each of these coupling regions (76) comprises a curved guide track (78) with a radially inner vertex region in the first absorber mass (4) and a curved guide track (80) with a radially outer vertex region in the absorber-mass carrier (3), and a coupling element (82) is positioned such that it can be moved with rolling action along the guide track (78) in the absorber mass (4) and the guide track (80) in the absorber-mass carrier (3), and **in that** the second absorber masses (6), which are provided in addition to the first absorber masses (4), are carried on the absorber-mass elements (5a, 5b) of the respectively associated first absorber masses (4) such that they can be deflected in the region of two second coupling regions (90), which are located one beside the other in the circumferential direction, and each of these coupling regions (90) comprises a curved guide track (92) with a radially inner vertex region in the second absorber mass (6) and a curved guide track (94) with a radially outer vertex region in the absorber-mass elements (5a, 5b) of the respectively associated first absorber masses (4), and a coupling element (96) is positioned such that it can be moved with rolling action along the guide tracks (92) in the second absorber mass (6) and the guide tracks (94) in the absorber-mass elements (5a, 5b) of the respectively associated first absorber masses (4), wherein the mass of the second absorber masses (6), on the one hand, and of the guide tracks (92, 94) of the absorber masses (6, 4), on the other hand, are such that the natural frequencies of the first absorber masses (4) are tuned to a different order to those of the second absorber masses (6).

2. Absorber system (36) according to Claim 1, **characterized in that** the absorber-mass carrier (3) has a plurality of absorber-mass-carrier elements (70, 74) which are arranged at a fixed axial distance apart, are connected to one another by means of spacers (84) and both engage axially between the absorber-mass elements (5a, 5b; 7a, 7b) at least of one of the absorber masses (4; 6), said absorber-mass elements being connected to one another by means of spacers (86; 98) and being arranged at a fixed axial distance apart.

3. Absorber system (36) according to Claim 2, **characterized in that** the at least one further absorber mass (4; 6), which is accommodated axially between the at least two absorber-mass elements (5a, 5b; 7a, 7b), is provided axially between the two absorber-mass-carrier elements (70; 74).

4. Absorber system (36) according to Claim 1, **characterized in that** the at least one first absorber mass (4), like the at least one second absorber mass (6), has respective absorber-mass elements (5a, 5b; 7a, 7b) which are connected to one another in each case by means of spacers (86, 98) and are arranged at a fixed axial distance apart, and **in that** the absorber-mass carrier (3) engages axially between the absorber-mass elements (5a, 5b; 7a, 7b) of at least one of the two absorber masses (4, 6).

5. Absorber system (36) according to Claim 4, **characterized in that** the absorber-mass carrier (3) engages both between the absorber-mass elements (5a, 5b) of the at least one first absorber mass (4) and between the absorber-mass elements (7a, 7b) of the at least one second absorber mass (6).

## Revendications

1. Système d'amortissement (36), comprenant un support de masse d'amortissement (3) et une unité de masse d'amortissement (1), dans lequel au moins une première masse d'amortissement (4) est reçue de manière relativement mobile au moyen d'une première unité de couplage (8) sur le support de masse d'amortissement (3) et au moins une deuxième masse d'amortissement (6) est reçue de manière relativement mobile au moyen d'une deuxième unité de couplage (9) sur ladite au moins une première masse d'amortissement (4), et l'une (4 ; 6) des au moins deux masses d'amortissement (4, 6) présentant des éléments de masse d'amortissement (5a, 5b ; 7a, 7b) disposés à distance axiale fixe les uns par rapport aux autres, reliés les uns aux autres au moyen d'écarteurs (86 ; 98), et qui reçoivent axialement entre eux respectivement l'autre (4 ; 6) des au moins deux masses d'amortissement (4, 6), le support de masse d'amortissement (3) venant en prise au moins par sa zone radiale (88a, 88b ; 88), tournée vers l'unité de masse d'amortissement (1), axialement entre les deux éléments de masse d'amortissement (5a, 5b ; 7a, 7b) disposés à distance axiale fixe les uns par rapport aux autres et reliés les uns aux autres au moyen d'écarteurs (86 ; 98), **caractérisé en ce que** chacune des premières masses d'amortissement (4) est supportée sur le support de masse d'amortissement (3) de manière à pouvoir être déviée au niveau de deux premières zones de couplage (76) adjacentes dans la direction circonférentielle, et chacune de ces zones de couplage (76) comprend dans la première masse d'amortissement (4) une glissière de guidage courbe (78) ayant une zone de sommet située radialement à l'intérieur, et dans le support de masse d'amortissement (3) une glissière de guidage courbe (80) ayant une zone de sommet située radialement à l'extérieur, et un élément de couplage (82) est positionné de telle sorte qu'il peut être déplacé par un mouvement de roulement le long de la glissière de guidage (78) dans la masse d'amortissement (4) et de la glissière de guidage (80) dans le support de masse d'amortissement (3), et **en ce que** les deuxièmes masses d'amortissement (6), prévues en plus des premières masses d'amortissement (4), sont supportées de manière à pouvoir être déviées au niveau de deux deuxièmes zones de couplage (90), adjacentes dans la direction circonférentielle, sur les éléments de masse d'amortissement (5a, 5b) des premières masses d'amortissement (4) respectivement associées, et chacune de ces zones de couplage (90) comprend dans la deuxième masse d'amortissement (6) une glissière de guidage courbe (92) ayant une zone de sommet située radialement à l'intérieur et dans les éléments de masse d'amortissement (5a, 5b) des premières masses d'amortissement (4) respectivement associées une glissière de guidage courbe (94) ayant une zone de sommet située radialement à l'extérieur, et un élément de couplage (96) est positionné de telle sorte qu'il peut être déplacé par un mouvement de roulement le long des glissières de guidage (92) dans la deuxième masse d'amortissement (6) et des glissières de guidage (94) dans les éléments de masse d'amortissement (5a, 5b) des premières masses d'amortissement (4) respectivement associées, la conception de la masse des deuxièmes masses d'amortissement (6) d'une part et des glissières de guidage (92, 94) des masses d'amortissement (6, 4) d'autre part étant effectuée de telle sorte que la syntonisation de la fréquence d'oscillation propre des premières masses d'amortissement (4) est effectuée sur un ordre différent que celui des deuxièmes masses d'amortissement (6).

2. Système d'amortissement (36) selon la revendication 1, **caractérisé en ce que** le support de masse d'amortissement (3) dispose d'une pluralité d'éléments de support de masse d'amortissement (70, 74) disposés à une distance axiale fixe les uns par rapport aux autres, reliés les uns aux autres au moyen d'écarteurs (84), et qui viennent tous les deux en prise axialement entre les éléments de masse d'amortissement (5a, 5b ; 7a, 7b), reliés les uns aux autres par des écarteurs (86 ; 98) et disposés à distance fixe les uns par rapport aux autres, d'au moins l'une des masses d'amortissement (4 ; 6).

3. Système d'amortissement (36) selon la revendication 2, **caractérisé en ce que** ladite au moins une autre masse d'amortissement (4 ; 6), reçue axialement entre les au moins deux éléments de masse d'amortissement (5a, 5b ; 7a, 7b), est prévue axialement entre les deux éléments de support de masse d'amortissement (70 ; 74).

4. Système d'amortissement (36) selon la revendication 1, **caractérisé en ce que** ladite au moins une première masse d'amortissement (4) ainsi que ladite au moins une deuxième masse d'amortissement (6) dispose respectivement d'éléments de masse d'amortissement (5a, 5b, 7a, 7b) qui sont respectivement reliés les uns aux autres au moyen d'écarteurs (86, 98) et qui sont disposés à une distance axiale fixe les uns par rapport aux autres, et **en ce que** le support de masse d'amortissement (3) vient en prise axialement entre les éléments de masse d'amortissement (5a, 5b, 7a, 7b) d'au moins l'une des deux masses d'amortissement (4, 6).

5. Système d'amortissement (36) selon la revendication 4, **caractérisé en ce que** le support de masse d'amortissement (3) vient en prise à la fois entre les éléments de masse d'amortissement (5a, 5b) de ladite au moins une première masse d'amortissement (4) et entre les éléments de masse d'amortissement (7a, 7b) de ladite au moins une deuxième masse d'amortissement (6) .
